# EUROPÄISCHE PATENTANMELDUNG

(11) **EP 1 683 619 A1**
(43) Veröffentlichungstag der Anmeldung: **26.07.2006**
(21) Anmeldenummer: 05025301.2
(22) Anmeldetag: 19.11.2005
(51) Int. Cl.: B29C 45/14

(54) **Verfahren und Vorrichtung zur Herstellung von Kunststoffleisten, Spritzgusswerkzeug einer derartigen Vorrichtung sowie mittels eines derartigen Verfahrens herstellbare Kunststoffleiste**

(30) Priorität: 14.01.2005 DE 102005001753
(71) Anmelder: REHAU AG + Co, 95111 Rehau (DE)
(72) Erfinder: Görmer, Lutz, 95111 Rehau (DE); Summerer, Wolfgang, 95111 Rehau (DE)

(57) **Zusammenfassung**

Eine Herstellungsvorrichtung für Kunststoffleisten hat einen Extruder zur Extrusion eines Kunststoff-Endlosstrangs, eine Konfektioniereinrichtung zum Ablängen des Kunststoff-Endlosstrangs zur Herstellung mindestens eines Leisten-Rohlings sowie ein Spritzgusswerkzeug mit mindestens einer Spritzgussform (7), in die ein Endabschnitt des Leisten-Rohlings einlegbar ist. Die Spritzgussform (7) hat einen ersten Formabschnitt (8), in den ein Flockteil zum Anspritzen eines Abschlussabschnitts an den Leisten-Rohling im Bereich des Flockteils einlegbar ist. Mit Hilfe dieser Herstellungsvorrichtung wird eine Kunststoffleiste mit einem endseitig angespritzten und beim Anspritzen flockbeschichteten Abschlussabschnitt hergestellt. Die Herstellungsvorrichtung und das mit dieser durchgeführte Herstellungsverfahren gewährleisten einen deutlich reduzierten Aufwand beim Herstellen einer derartigen, optisch gefälligen Kunststoffleiste.

## Beschreibung

Die Erfindung betrifft ein Verfahren zur Herstellung von Kunststoffleisten, bei dem zunächst ein Kunststoff-Endlosstrang extrudiert, anschließend zur Herstellung mindestens eines Leisten-Rohlings abgelängt und gegebenenfalls vorkonfektioniert und bei dem ein Endabschnitt des Leisten-Rohlings in eine Spritzgussform eines Spritzgusswerkzeugs eingelegt wird.

Ferner betrifft die Erfindung eine Vorrichtung zum Herstellen von Kunststoffleisten
- mit einem Extruder zur Extrusion eines Kunststoff-Endlosstrangs,
- mit einer Konfektioniereinrichtung zum Ablängen des Kunststoff-Endlosstrangs zur Herstellung mindestens eines Leisten-Rohlings und
- mit einem Spritzgusswerkzeug mit mindestens einer Spritzgussform, in die ein Endabschnitt des Leisten-Rohlings einlegbar ist.

Weiterhin betrifft die Erfindung ein Spritzgusswerkzeug zum Einsatz in einer derartigen Herstellvorrichtung und eine Kunststoffleiste, die mit einem derartigen Verfahren herstellbar ist.

Ein derartiges Verfahren, eine Vorrichtung zu dessen Durchführung mit einem Spritzgusswerkzeug sowie eine derartige Kunststoffleiste sind durch offenkundige Vorbenutzung bekannt.

Insbesondere zur Verbesserung der Gleiteigenschaften werden Kunststoffleisten mit einer Flockschicht versehen. Kunststoffleisten mit einer längs hierauf aufgebrachten Flockschicht sind bekannt. Sollen auch Abschlussabschnitte der Kunststoffleiste, die sich von der Gestalt her vom sonstigen Leistenprofil unterscheiden, zur Verbesserung der Gleiteigenschaften mit einer Beflockung versehen werden, so geschieht das nach dem Anformen des Abschlussabschnitts. Diese nachträgliche Beflockung ist aufwändig.

Es ist daher eine Aufgabe der vorliegenden Erfindung, ein Herstellungsverfahren der eingangs genannten Art derart weiterzubilden, dass Kunststoffleisten mit beflockten Abschlussabschnitten mit geringerem Aufwand hergestellt werden können.

Diese Aufgabe ist erfindungsgemäß gelöst durch ein Herstellungsverfahren mit folgenden weiteren Schritten:
- Einlegen eines Flockteils in die Spritzgussform vor dem Einlegen des Leisten-Rohlings,
- Anspritzen eines Abschlussabschnitts an den Leisten-Rohling in der Spritzgussform im Bereich des Flockteils nach dem Einlegen von diesem.

Erfindungsgemäß wurde erkannt, dass es möglich ist, das Beflocken und das Anspritzen des Abschlussabschnitts elegant in einem Arbeitsschritt zusammenzufassen. Beim Anspritzen des Abschlussabschnitts wird gleichzeitig dieser mit dem Flockteil verbunden. Ein nachträgliches Aufbringen des Flockteils entfällt. Es resultiert ein deutlich reduzierter Aufwand beim Herstellen der Kunststoffleiste mit beflocktem Abschlussabschnitt.

Bevorzugt wird das Flockteil als Einlege-Verbund-Flockteil, umfassend eine Flockschicht und eine daran angespritzte Kunststoffschicht, in die Spritzgussform eingelegt, wobei vor dem Einlegen des Einlege-Verbund-Flockteils in die Spritzgussform das Einlege-Verbund-Flockteil durch Anspritzen der Kunststoffschicht an die Flockschicht hergestellt wird. Ein derartiges Einlege-Verbund-Flockteil ist stabiler als eine reine Flockschicht, so dass beim Anspritzen des Abschlussabschnitts die Gefahr einer unerwünschten Verschiebung des eingelegten Flockteils bei Verwendung des Einlege-Verbund-Flockteils reduziert ist. Das Spritzgusswerkzeug kann dann unaufwändiger ausgelegt werden.

Das Anspritzen der Kunststoffschicht für das Einlege-Verbund-Flockteil kann in einem weiteren Formabschnitt des Spritzgusswerkzeugs erfolgen. Dies erhöht die Effizienz bei der Herstellung der Kunststoffleisten.

Das Flockteil kann vor dem Einlegen durch Schneiden in eine vorgegebene Gestalt gebracht werden. Als Flock-Ausgangsmaterial kann dann z.B. ein Endlos-Flockband mit entsprechender Breite eingesetzt werden. Dieses wird dann entsprechend zugeschnitten, z.B. an die Form des Abschlussabschnitts angepasst.

Das Schneiden kann dabei in einer Stanzform des Spritzgusswerkzeugs erfolgen. Dies erhöht die Effizienz des Herstellungsverfahrens.

Bevorzugt wird im Spritzgusswerkzeug in einem Arbeitsschritt gleichzeitig der Abschlussabschnitt an den Leisten-Rohling und die Kunststoffschicht an die Flockschicht zur Herstellung des Einlege-Verbund-Flockteils angespritzt. In einem Arbeitszyklus kann dann sowohl ein Einlege-Verbund-Flockteil als auch eine komplizierte Kunststoffleiste mit Abschlussabschnitt hergestellt werden.

Ebenfalls bevorzugt ist es, dass im Spritzgusswerkzeug in einem Arbeitsschritt gleichzeitig der Abschlussabschnitt an den Leisten-Rohling angespritzt wird und das Schneiden des Flockteils erfolgt. Innerhalb eines Arbeitszyklus des Spritzgusswerkzeugs wird dann ein Flockteil in die vorgegebene Gestalt gebracht und eine komplettierte Kunststoffleiste mit angespritztem Abschlussabschnitt hergestellt. Bei einer besonders bevorzugten Variante des Herstellungsverfahrens unter Verwendung von Einlege-Verbund-Flockteilen erfolgen alle drei Arbeitsschritte, nämlich das Anspritzen des Abschlussabschnitts an den Leisten-Rohling, das Anspritzen der Kunststoffschicht an die Flockschicht zur Herstellung des Einlege-Verbund-Flockteils sowie das Schneiden des Flockteils bzw. der Flockschicht gleichzeitig in einem Arbeitsschritt. Das Spritzgusswerkzeug wird bei einem derartigen Herstellungsverfahren sehr effizient eingesetzt.

Vor dem Anspritzen des Abschlussabschnitts und/oder der Kunststoffschicht kann ein Haftvermittler auf den Leisten-Rohling und/oder die Flockschicht aufgebracht werden. Ein derartiger Haftvermittler begünstigt die Anbindung der angespritzten Komponente an das jeweilige Substrat.

Die oben genannte Aufgabe ist, was die Weiterbildung der eingangs genannten Herstellungsvorrichtung angeht, erfindungsgemäß dadurch gelöst, dass die Spritzgussform einen ersten Formabschnitt aufweist, in den ein Flockteil zum Anspritzen eines Abschlussabschnitts an den Leisten-Rohling im Bereich des Flockteils einlegbar ist.

Die Vorteile dieser erfindungsgemäßen Herstellungsvorrichtung entsprechen denjenigen, die vorstehend im Zusammenhang mit dem erfindungsgemäßen Herstellungsverfahren bereits diskutiert wurden.

Der erste Formabschnitt kann einen Formwandabschnitt aufweisen, dessen Oberfläche mit einer Unterdruckquelle in Fluidverbindung steht. Hierdurch kann das eingelegte Flockteil an den Formwandabschnitt angesaugt und damit festgehalten werden. Beim nachfolgenden Anspritzvorgang ist somit die Gefahr vermieden, dass das Flockteil oder das Einlege-Verbund-Flockteil verschoben wird.

Die Oberfläche des Formwandabschnitts kann Ansaugbohrungen oder Ansaugschlitze aufweisen. Derartige Ansaugöffnungen, deren Verteilungen, Größe und Anzahl an die Gestalt des einzulegenden Flockteils bzw. Einlege-Verbund-Flockteils angepasst sein können, gewährleisten einen sicheren Halt des Flockteils bzw. des Einlege-Verbund-Flockteils am Formwandabschnitt.

Die Oberfläche des Formwandabschnitts kann alternativ oder zusätzlich fluiddurchlässig porös gestaltet sein. Insbesondere kann als Oberfläche des Formwandabschnitts ein porenhaltiges Sintermaterial eingesetzt sein. Diese Variante der Oberfläche begünstigt eine gleichmäßige Anhaftung des Flockteils bzw. des Einlege-Verbund-Flockteils über dessen gesamte am Formwandabschnitt anliegende Fläche.

Das Spritzgusswerkzeug kann mindestens einen weiteren Formabschnitt aufweisen, in welchem an eine Flockschicht eine Kunststoffschicht zur Herstellung eines Einlege-Verbund-Flockteils anspritzbar ist. Weiterhin kann das Spritzgusswerkzeug mindestens eine Stanzform aufweisen, in welchem das Flockteil vor dem Einlegen durch Schneiden in eine vorgegebene Gestalt gebracht wird. Vorteile dieser Ausgestaltungen des Spritzgusswerkzeugs wurden oben im Zusammenhang mit dem Herstellungsverfahren schon diskutiert.

Die oben genannte Aufgabe ist, was die Weiterbildung des Spritzgusswerkzeugs der eingangs genannten Herstellungsvorrichtung angeht, erfindungsgemäß dadurch gelöst, dass ein Spritzgusswerkzeug zum Einsatz in einer oben bereits diskutierten erfindungsgemäßen Herstellungsvorrichtung geschaffen wird. Die Vorteile des erfindungsgemäßen Spritzgusswerkzeugs entsprechen denen, die oben schon im Zusammenhang mit dem erfindungsgemäßen Herstellungsverfahren und der erfindungsgemäßen Herstellungsvorrichtung diskutiert wurden.

Ein Spritzgusswerkzeug mit einer gleichen Anzahl von ersten und weiteren Formabschnitten bzw. ein Spritzgusswerkzeug mit einer gleichen Anzahl von ersten Formabschnitten und Stanzformen gewährleistet eine effiziente Durchführung des Herstellungsverfahrens.

Die oben genannte Aufgabe ist, was die Weiterbildung der eingangs genannten Kunststoffleiste angeht, erfindungsgemäß gelöst durch eine Kunststoffleiste mit einem endseitig angespritzten und beim Anspritzen flockbeschichteten Abschlussabschnitt.
Eine derartige Kunststoffleiste hat einen verringerten Herstellungsaufwand und ist daher kostengünstig herstellbar.

Die Kunststoffleiste kann ein längs verlaufendes Flockband tragen. Es resultiert eine längs ihrer Gesamterstreckung flockbeschichtete Kunststoffleiste mit Abschlussabschnitt mit einer ansprechenden Optik.

Ausführungsbeispiele der Erfindung werden nachfolgend anhand der Zeichnung näher erläutert. In dieser zeigen:
- Fig. 1: perspektivisch die untere Werkzeughälfte eines Spritzgusswerkzeugs einer Vorrichtung zum Herstellen von Kunststoffleisten;
- Fig. 2: eine Ausschnittsvergrößerung aus Fig. 1 im Bereich eines Formabschnitts einer Spritzgussform des Spritzgusswerkzeugs, in dem ein Flockteil einlegbar ist;
- Fig. 3: eine weitere Ausschnittsvergrößerung aus Fig. 2;
- Fig. 4: nochmals vergrößert die Aufsicht auf ein Flockteil vor dem Einlegen;
- Fig. 5: eine zu Fig. 3 ähnliche Ansicht des Formabschnitts mit eingelegtem Flockteil;
- Fig. 6: schematisch Hauptkomponenten der Vorrichtung zum Herstellen der Kunststoffleisten;
- Fig. 7: eine zu Fig. 1 ähnliche Ansicht einer unteren Werkzeughälfte eines Spritzgusswerkzeugs einer alternativen Vorrichtung zum Herstellen von Kunststoffleisten und
- Fig. 8: eine Seitenansicht eines Endabschnitts einer hergestellten Kunststoffleiste.

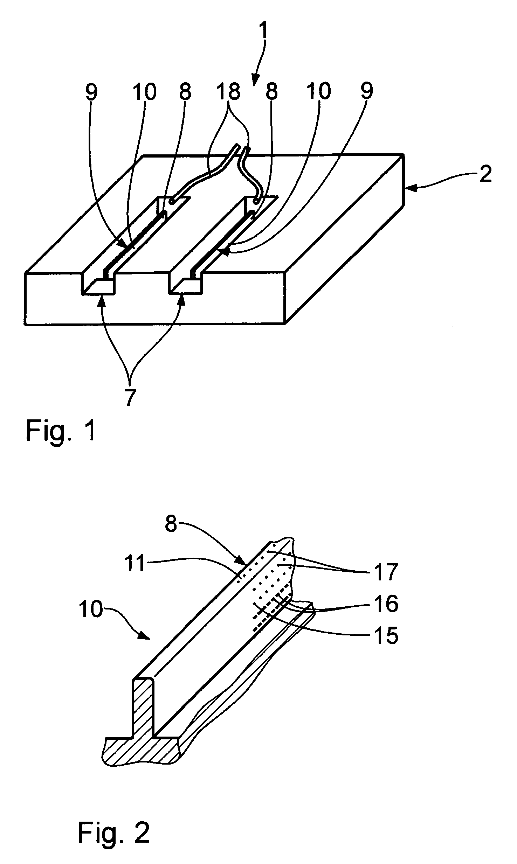

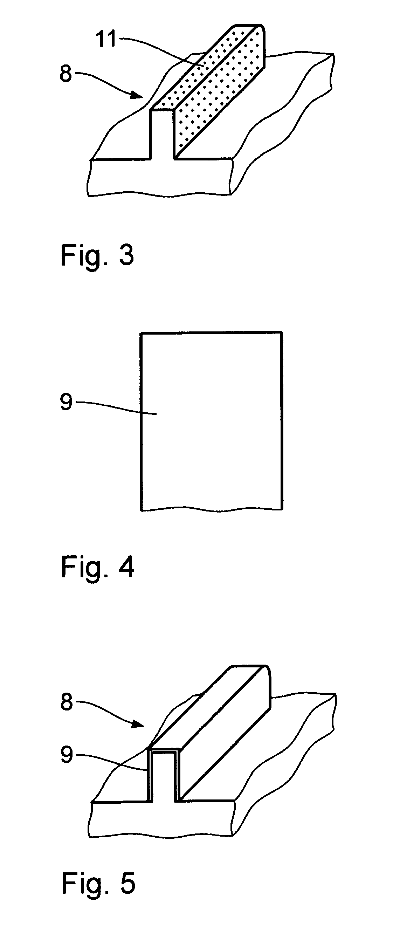

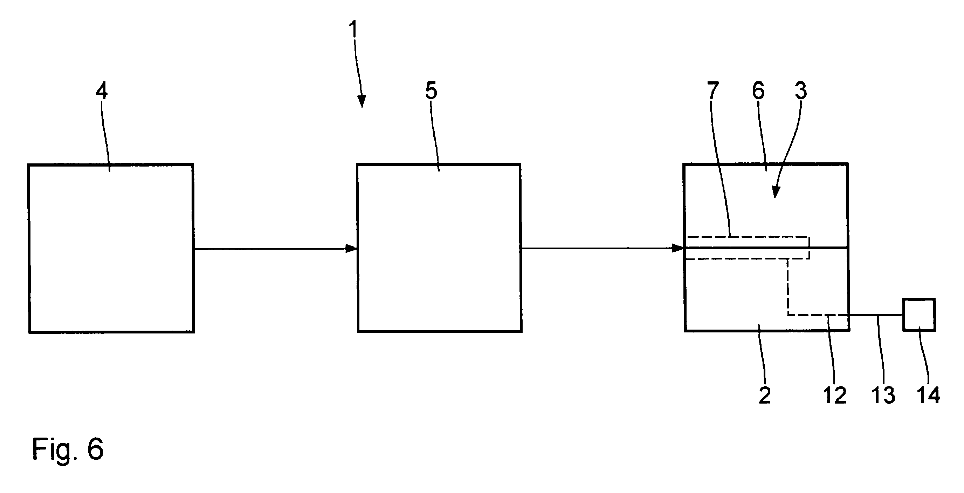

Eine Ausführungsform einer insgesamt mit 1 bezeichneten Vorrichtung zum Herstellen von Kunststoffleisten zeigen schematisch die Fig. 6 und, was Details einer unteren Werkzeughälfte 2 eines Spritzgusswerkzeuges 3 der Herstellungsvorrichtung 1 angeht, die Fig. 1 bis 5.

Als Hauptkomponenten weist die Herstellungsvorrichtung 1 einen Extruder 4 zur Extrusion eines Kunststoff-Endlosstrangs, eine Konfektioniereinrichtung 5 zum Ablängen des Kunststoff-Endlosstrangs zur Herstellung mindestens eines Leisten-Rohlings sowie das Spritzgusswerkzeug 3 auf. Letzteres hat neben der unteren Werkzeughälfte 2 noch eine obere Werkzeughälfte 6, die gemeinsam zwei Spritzgussformen 7 begrenzen, in die jeweils ein nicht dargestellter Endabschnitt des Leisten-Rohlings einlegbar ist.

Von den beiden Spritzgussformen 7 ist in Fig. 6 eine schematisch angedeutet.

Jede Spritzgussform 7 weist endseitig einen ersten Formabschnitt 8 auf, in den ein Flockteil 9 eingelegt werden kann.

Die untere Werkzeughälfte 2 weist in jeder Spritzgussform 7 eine längs verlaufende Formrippe 10 auf, die komplementär zu einer entsprechenden Längsnut des Leisten-Rohlings gestaltet ist. Endseitig weist die Formrippe 10 im ersten Formabschnitt 8 einen Formwandabschnitt 11 auf, dessen Oberfläche von der Ausdehnung her mit der Fläche des Flockteils 9 übereinstimmt. Die Oberfläche des Formwandabschnitts 11 steht jeweils über eine in der unteren Werkzeughälfte 2 ausgeführte Fluidleitung 12 und eine Verbindungsleitung 13 mit einer Unterdruckquelle 14 in Fluidverbindung.

Die Oberfläche des Formwandabschnitts 11 ist fluiddurchlässig porös in Fluidverbindung mit der Fluidleitung 12 gestaltet. Fig. 2 zeigt mehrere Ausführungsvarianten der fluiddurchlässigen Oberfläche des Formwandabschnitts 11.
Die Fluiddurchlässigkeit kann erzeugt werden durch Ansaugbohrungen 15, durch Ansaugschlitze 16 oder durch eine Vielzahl von Poren 17 einer insgesamt porös ausgestalteten Oberfläche des Formwandabschnitts 11. Bei der letzten Variante kann diese Oberfläche zum Beispiel als poröses Sintermaterial ausgeführt sein.

Kunststoffleisten mit angespritzten Abschlussabschnitten werden mit der Herstellungsvorrichtung 1 folgendermaßen gefertigt: Zunächst wird im Extruder 4 ein Kunststoff-Endlosstrang extrudiert. Letzterer wird anschließend zur Herstellung mindestens eines Leisten-Rohlings in der Konfektioniereinrichtung 5 abgelängt. Auf die Oberfläche des Formwandabschnitts 11 des ersten Formabschnitts 8 wird dann zur Vorbereitung das Flockteil 9 aufgelegt, wie in Fig. 5 dargestellt. Aufgrund des Unterdrucks der Unterdruckquelle 14 und der hierdurch erfolgenden Saugwirkung der fluiddurchlässig porös gestalteten Oberfläche des Formwandabschnitts 11 wird das Flockteil 9 sicher an der Oberfläche des Formwandabschnitts 11 gehalten. Sodann wird einer der Endabschnitte des Leisten-Rohlings bei geöffnetem Spritzgusswerkzeug 3 in die Spritzgussform 7 eingelegt. Auf dem eingelegten Leisten-Rohling kann zusätzlich schon ein flockierter Bereich vorhanden sein. Insbesondere kann ein Flockband aufgeklebt sein. Bei der dargestellten Ausführung gemäß Fig. 1 liegen zwei Spritzgussformen 7 vor, so dass die Endabschnitte zweier Leisten-Rohlinge in das Spritzgusswerkzeug 3 eingelegt werden können. Anschließend wird das Spritzgusswerkzeug 3 geschlossen. Über Angussleitungen 18 (vgl. Fig. 1) wird dann plastifizierte Kunststoffmasse in die Spritzgussformen 7 eingeleitet und der Abschlussabschnitt an den Leisten-Rohling im Bereich des Flockteils 9 angespritzt. Durch den Anspritzvorgang werden der Endabschnitt des Leisten-Rohlings und das Flockteil 9 über den Abschlussabschnitt, dessen Form von der Spritzgussform 7 vorgegeben wird, miteinander verbunden. Der Abschlussabschnitt ist nach erfolgtem Anspritzvorgang aufgrund des so aufgebrachten Flockteils mit einer Flockschicht beschichtet.

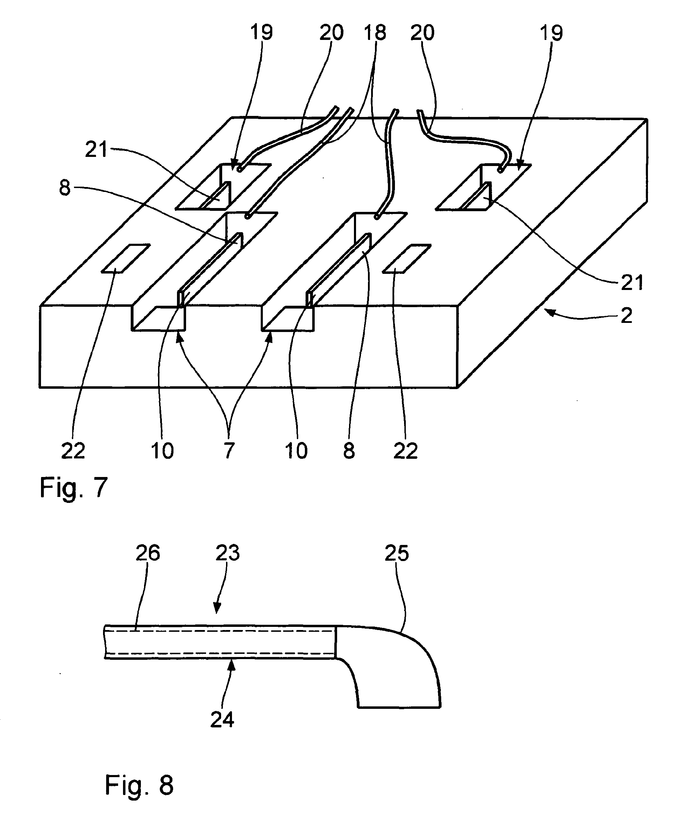

Fig. 7 zeigt die untere Werkzeughälfte einer weiteren Ausführungsform eines Spritzgusswerkzeugs zum Einsatz in einer alternativen Vorrichtung zum Herstellen von Kunststoffleisten. Komponenten, die denjenigen entsprechen, die vorstehend schon unter Bezugnahme auf die Fig. 1 bis 5 beschrieben wurden, tragen die gleichen Bezugsziffern und werden nicht nochmals im Einzelnen erläutert. Der Grundaufbau der Herstellungsvorrichtung mit der unteren Werkzeughälfte 2 nach Fig. 7 entspricht dem, der vorstehend im Zusammenhang mit Fig. 6 beschrieben wurde.

Die untere Werkzeughälfte nach Fig. 7 weist zusätzlich zu den Spritzgussformen 7 mit den ersten Formabschnitten 8 noch zwei weitere Formabschnitte 19 auf, zu denen eigene Angussleitungen 20 führen. Die weiteren Formabschnitte 19 haben in etwa die Abmessungen der ersten Formabschnitte 8. Entsprechend zu den fluiddurchlässig porös gestalteten Formwandabschnitten 11 weisen auch die weiteren Formabschnitte 19 fluiddurchlässig porös gestaltete Formabschnitte 21 auf, die über nicht dargestellte Fluidleitungen mit der Unterdruckquelle 14 in Verbindung stehen.

Die untere Werkzeughälfte nach Fig. 7 weist ferner zwei Stanzformen 22 auf. Letztere wirken mit entsprechenden Stanzstempeln der oberen Werkzeughälfte 6 zum Zuschneiden der Flockteile 9 zusammen.
Kunststoffleisten mit angespritzten Flockteilen 9 werden mit der Herstellungsvorrichtung mit dem Spritzgusswerkzeug mit der unteren Werkzeughälfte 2 nach Fig. 7 folgendermaßen hergestellt: Zunächst werden aus zwei Flockbändern mit Hilfe der beiden Stanzformen 22 zwei Flockteile 9 ausgeschnitten, so dass sie die Form gemäß Fig. 4 haben. Hierzu wird das Spritzgusswerkzeug 3 zunächst geöffnet und dann zum Stanzen wieder geschlossen. Im nächsten Arbeitsgang erfolgt das Stanzen zweier weiterer Flockteile mit Hilfe der Stanzform 22. Gleichzeitig werden nach dem Öffnen des Spritzgusswerkzeugs 3 zur Vorbereitung dieses weiteren Stanzvorgangs die beiden schon ausgestanzten Flockteile 9 in die weiteren Formabschnitte 19 eingelegt und, wie oben im Zusammenhang mit dem Formabschnitt 11 erläutert, vom Formwandabschnitt 21 durch Unterdruck festgehalten. Beim Schließen des Spritzgusswerkzeugs 3 werden dann die beiden Flockteile 9 mit Hilfe der Stanzform 22 gestanzt. Nach dem Schließen wird über die Angussleitungen 20 an die in die weiteren Formabschnitte 19 eingelegten Flockteile eine Kunststoffschicht angespritzt, so dass ein Einlege-Verbund-Flockteil, umfassend eine Flockschicht und die darin angespritzte Kunststoffschicht, entsteht. Nach dem nächsten Öffnen des Spritzgusswerkzeugs 3 werden die im letzten Schritt hergestellten Einlege-Verbund-Flockteile von den weiteren Formabschnitten 19 in die ersten Formabschnitte 8 der Spritzgussformen 7 überführt und über Unterdruck an den Formwandabschnitten 11 festgehalten. Die im letzten Stanzschritt erzeugten Flockteile werden dann bei weiterhin geöffnetem Stanzwerkzeug in die weiteren Formabschnitte 19 überführt und über Unterdruck an den Formwandabschnitten 21 festgehalten. Bei immer noch geöffnetem Spritzgusswerkzeug wird sodann das Flockband so umpositioniert, dass aus diesem mit Hilfe der Stanzform 22 erneut zwei Flockteile ausgestanzt werden können. Sodann werden die Enden zweier Leisten-Rohlinge in die mittels der Einlege-Verbund-Flockteile vorbereiteten Spritzgussformen 7 eingelegt.
Nach dem Schließen des Spritzgusswerkzeugs werden durch Stanzen zwei weitere Flockteile erzeugt. In den weiteren Formabschnitten 19 werden, wie oben schon beschrieben, zwei Einlege-Verbund-Flockteile durch Anspritzen der Kunststoffschicht an die Flockschicht erzeugt. In den ersten Formabschnitten 8 der Spritzgussformen 7 werden die Einlege-Verbund-Flockteile, wie oben im Zusammenhang mit der Ausführung der unteren Werkzeughälfte 2 nach Fig. 1 beschrieben, an die eingelegten Leisten-Rohlinge angespritzt.
Bei jedem nachfolgenden Öffnen und Schließen des Spritzgusswerkzeugs werden gleichzeitig hergestellt: zwei neue Flockteile durch Stanzen, zwei neue Einlege-Verbund-Flockteile durch Anspritzen in den weiteren Formabschnitten 19 sowie zwei weitere Kunststoffleisten mit angespritzten Abschlussabschnitten.

Die beiden vorstehend beschriebenen Ausführungsbeispiele weisen jeweils paarweise Formkomponenten auf, so dass Kunststoffleisten mit Abschlussabschnitten jeweils paarweise hergestellt werden. Genauso ist es möglich, bei weiteren Varianten von Herstellungsvorrichtungen größere Anzahlen derartiger Formkomponenten bereitzustellen, so dass mit einem Arbeitsgang, also einem Öffnen und Schließen des Spritzgusswerkzeugs 3, eine größere Anzahl von Kunststoffleisten mit Abschlussabschnitten hergestellt wird. Es ist zum Beispiel denkbar, eine untere Werkzeughälfte 2 nach Art derjenigen der Fig. 7 vorzusehen, die zehn erste Formabschnitte 8, zehn weitere Formabschnitte 19 und zehn Stanzformen 22 aufweist. Bei jedem Arbeitszyklus einer derartigen Herstellungsvorrichtung entstehen dann zehn Kunststoffleisten mit angespritzten Abschlussabschnitten.

Vor dem Anspritzen des Abschlussabschnitts und/oder der Kunststoffschicht auf den Leisten-Rohling und/oder die Flockschicht kann auf den Leisten-Rohling und/oder die Flockschicht ein Haftvermittler aufgebracht werden.

Bei der hergestellten Kunststoffleiste mit angespritztem Abschlussabschnitt kann es sich um eine Fensterschachtabdeckung für ein Seitenfenster eines Kraftfahrzeugs handeln, welches als Abschlussabschnitt eine Endkappe aufweist.

Fig. 8 zeigt eine Kunststoffleiste 23, die mit Hilfe der oben beschriebenen Varianten von Herstellungsvorrichtungen und Herstellungsverfahren hergestellt werden kann. Die Kunststoffleiste 23 weist einen Endabschnitt 24 mit einem angespritzten und flockbeschichteten Abschlussabschnitt 25 auf. Der Endabschnitt 24 kann ein bereits vor dem Anspritzen aufgeklebtes streifenförmiges Flockband 26 tragen.

## Patentansprüche

1. Verfahren zum Herstellen von Kunststoffleisten (23) mit folgenden Schritten:
- Extrusion eines Kunststoff-Endlosstrangs,
- Ablängen des Kunststoff-Endlosstrangs zur Herstellung mindestens eines Leisten-Rohlings,
- Einlegen eines Endabschnitts (24) des Leisten-Rohlings in eine Spritzgussform (7) eines Spritzgusswerkzeugs (3),
**gekennzeichnet durch** folgende weiteren Schritte:
- Einlegen eines Flockteils (9) in die Spritzgussform (7) vor dem Einlegen des Leisten-Rohlings,
- Anspritzen eines Abschlussabschnitts (25) an den Leisten-Rohling in der Spritzgussform (7) im Bereich des Flockteils (9) nach dem Einlegen von diesem.

2. Verfahren nach Anspruch 1, **dadurch gekennzeichnet, dass** das Flockteil (9) als Einlege-Verbund-Flockteil, umfassend eine Flockschicht und eine daran angespritzte Kunststoffschicht, in die Spritzgussform (7) eingelegt wird, wobei vor dem Einlegen des Einlege-Verbund-Flockteils in die Spritzgussform (7) das Einlege-Verbund-Flockteil hergestellt wird durch Anspritzen der Kunststoffschicht an die Flockschicht.

3. Verfahren nach Anspruch 2, **dadurch gekennzeichnet, dass** das Anspritzen der Kunststoffschicht in einem weiteren Formabschnitt (19) des Spritzgusswerkzeugs (3) erfolgt.

4. Verfahren nach einem der Ansprüche 1 bis 3, **dadurch gekennzeichnet, dass** das Flockteil (9) vor dem Einlegen durch Schneiden in eine vorgegebene Gestalt gebracht wird.

5. Verfahren nach Anspruch 4, **dadurch gekennzeichnet, dass** das Schneiden in einer Stanzform (22) des Spritzgusswerkzeugs (3) erfolgt.

6. Verfahren nach einem der Ansprüche 2 bis 5, **dadurch gekennzeichnet, dass** im Spritzgusswerkzeug (3) in einem Arbeitsschritt gleichzeitig
- der Abschlussabschnitt (25) an den Leisten-Rohling und
- die Kunststoffschicht an die Flockschicht zur Herstellung des Einlege-Verbund-Flockteils
angespritzt wird.

7. Verfahren nach Anspruch 5 oder 6, **dadurch gekennzeichnet, dass** im Spritzgusswerkzeug (3) in einem Arbeitsschritt gleichzeitig
- der Abschlussabschnitt (25) an den Leisten-Rohling angespritzt wird und
- das Schneiden des Flockteils erfolgt.

8. Verfahren nach einem der Ansprüche 1 bis 7, **dadurch gekennzeichnet, dass** vor dem Anspritzen des Abschlussabschnitts (25) und/oder der Kunststoffschicht ein Haftvermittler auf den Leisten-Rohling und/oder die Flockschicht aufgebracht wird.

9. Vorrichtung zum Herstellen von Kunststoffleisten (23)
- mit einem Extruder (4) zur Extrusion eines Kunststoff-Endlosstrangs,
- mit einer Konfektioniereinrichtung (5) zum Ablängen des Kunststoff-Endlosstrangs zur Herstellung mindestens eines Leisten-Rohlings,
- mit einem Spritzgusswerkzeug (3) mit mindestens einer Spritzgussform (7), in die ein Endabschnitt des Leisten-Rohlings einlegbar ist,
**dadurch gekennzeichnet, dass** die Spritzgussform (7) einen ersten Formabschnitt (8) aufweist, in den ein Flockteil (9) zum Anspritzen eines Abschlussabschnitts (25) an den Leisten-Rohling im Bereich des Flockteils (9) einlegbar ist.

10. Vorrichtung nach Anspruch 9, **dadurch gekennzeichnet, dass** der erste Formabschnitt (8) einen Formwandabschnitt (11) aufweist, dessen Oberfläche mit einer Unterdruckquelle (14) in Fluidverbindung (12, 13) steht.

11. Vorrichtung nach Anspruch 10, **dadurch gekennzeichnet, dass** die Oberfläche des Formwandabschnitts (11) Ansaugbohrungen (15) oder Ansaugschlitze (16) aufweist.

12. Vorrichtung nach Anspruch 10 oder 11, **dadurch gekennzeichnet, dass** die Oberfläche des Formwandabschnitts (11) fluiddurchlässig porös (17) gestaltet ist.

13. Vorrichtung nach einem der Ansprüche 9 bis 12, **dadurch gekennzeichnet, dass** das Spritzgusswerkzeug (3) mindestens einen weiteren Formabschnitt (19) aufweist, in welchen an eine Flockschicht eine Kunststoffschicht zur Herstellung eines Einlege-Verbund-Flockteils anspritzbar ist.

14. Vorrichtung nach einem der Ansprüche 9 bis 13, **dadurch gekennzeichnet, dass** das Spritzgusswerkzeug (3) mindestens eine Stanzform (22) aufweist, in welchem das Flockteil (9) vor dem Einlegen durch Schneiden in eine vorgegebene Gestalt gebracht wird.

15. Spritzgusswerkzeug (3) zum Einsatz in einer Herstellvorrichtung nach einem der Ansprüche 9 bis 14.

16. Spritzgusswerkzeug (3) nach Anspruch 15, **gekennzeichnet durch** eine gleiche Anzahl von ersten Formabschnitten (8) und weiteren Formabschnitten (19).

17. Spritzgusswerkzeug nach Anspruch 15 oder 16, **gekennzeichnet durch** eine gleiche Anzahl von ersten Formabschnitten (8) und Stanzformen (22).

18. Kunststoffleiste (23) mit einem endseitig angespritzten und beim Anspritzen flockbeschichteten Abschlussabschnitt.

19. Kunststoffleiste nach Anspruch 18, **gekennzeichnet durch** ein längs der Kunststoffleiste (23) aufgebrachtes Flockband (26).
